# EUROPEAN PATENT APPLICATION

(11) **EP 3 061 990 A1**
(43) Date of publication of application: **31.08.2016**
(21) Application number: 16157547.7
(22) Date of filing: 26.02.2016
(51) Int. Cl.: F16H 3/72, F02M 39/02, F02M 21/02, F02M 37/06, F04D 15/00, F04D 27/00, F04C 14/08

(54) **VARIABLE DRIVE FOR LIQUIFIED NATURAL GAS PUMP**

(30) Priority: 27.02.2015 US 201562121768 P; 23.02.2016 US 201615051114
(71) Applicant: AVL Powertrain Engineering, Inc., Plymouth MI 48170 (US)
(72) Inventor: Mordukhovich, Gregory, Bloomfield Hills, Michigan 48302 (US); Kozan, Michael, Canton, Michigan 48188 (US)
(74) Representative: Witte, Weller & Partner Patentanwälte mbB

(57) **Abstract**

A fuel pump assembly (20) including a fuel pump (30) and a variable drive mechanism (32) is provided. The fuel pump has a pump input shaft (38) rotatably coupled to an impeller (36). The variable drive mechanism has a drive input shaft that receives torque from the engine (26) of a vehicle and a drive output shaft that is rotatably coupled to the pump input shaft. The variable drive mechanism further comprises a planetary gearset interconnecting the drive input shaft and the drive output shaft. The planetary gearset has a variable gear ratio that varies rotational speed of the drive output shaft and therefore the pump input shaft relative to the rotational speed of the drive input shaft. Accordingly, the rotational speed of the pump input shaft and thus the volume flowrate of the fuel pump can be adjusted for any given engine speed to minimize pump related losses.

## Description

### FIELD

The present disclosure generally relates to fuel pump assemblies, and more specifically, to variable drive mechanisms that connect to and drive a pump input shaft of a liquefied natural gas pump.

### BACKGROUND

This section provides background information related to the present disclosure which is not necessarily prior art.

Liquefied natural gas pumps are utilized in vehicles having engines that are powered by liquefied natural gas (LNG). As a fuel, liquefied natural gas is a cleaner alternative to fossil fuels since combustion of liquefied natural gas produces fewer pollutants and other harmful emissions. Conventional liquefied natural gas pumps are non-variable positive displacement pumps meaning the volume flowrate of the liquefied natural gas pump is fixed for a given pump speed. Such pumps generally have an impeller that is mounted on a pump input shaft. The pump input shaft is driven directly or indirectly by the engine. Accordingly, the pump speed and thus the volume flowrate of conventional liquefied natural gas pumps are dependent on the rotational speed of the engine. As a result, there are times when the volume flowrate of the liquefied natural gas pump exceeds the fuel requirements of the engine. This is particularly true in heavy duty truck applications when the engine and thus the liquefied natural gas pump are operating at high rotational speeds. Under these circumstances, pump-related losses, including friction losses and viscous losses, are unnecessarily high and contribute to reduced fuel economy.

Current liquefied natural gas pumps are designed to be installed within cryogenic vessel fuel tanks in order to minimize heat leak and to limit external exposure of cryogenic pump components. As a result, such liquefied natural gas pumps are highly specialized for operation at the low temperatures associated with a cryogenic environment. Accordingly, the adoption of existing variable pump designs found in other applications would require extensive re-design work and would result in high costs due to the specific requirements of liquefied natural gas pumps. Accordingly, conventional, non-variable liquefied natural gas pumps remain in use despite the associated pump-related losses and reduced vehicle efficiencies.

### SUMMARY

This section provides a general summary of the disclosure, and is not a comprehensive disclosure of its full scope or all of its features.

The subject disclosure provides an efficiency improving solution by providing a fuel pump assembly that includes a fuel pump and a variable drive mechanism. The fuel pump has a pump input shaft that is rotatably coupled to an impeller. The variable drive mechanism includes a drive input shaft that receives torque from the engine of the vehicle and a drive output shaft that is rotatably coupled to the pump input shaft of the fuel pump. A planetary gearset interconnects the drive input shaft and the drive output shaft to define a first torque flow path. The planetary gearset has a variable gear ratio that varies the rotational speed of the drive output shaft and thus the pump input shaft relative to a rotational speed of the drive input shaft and the engine.

Advantageously, the variable gear ratio of the variable drive mechanism allows the input shaft of the fuel pump to be driven at different rotational speeds for any given rotational speed of the drive input shaft (i.e. for any given engine speed). Accordingly, the pump speed and thus the volume flowrate of the fuel pump are no longer dependent on engine speed alone. As a result, the pump speed of non-variable fuel pumps, such as a non-variable positive displacement liquefied natural gas pump, may be adjusted using the variable drive mechanism to minimize pump-related losses and increase efficiency. At the same time, the use of the variable drive mechanism to control pump speed and volume flowrate avoids the need to completely redesign fuel pumps for use in liquefied natural gas power vehicles.

### BRIEF DESCRIPTION OF THE DRAWINGS

Other advantages of the present invention will be readily appreciated, as the same becomes better understood by reference to the following detailed description when considered in connection with the accompanying drawings wherein:
Figure 1 is an environmental side view of an exemplary liquefied natural gas pump assembly constructed in accordance with the subject disclosure where liquefied natural gas pump assembly is disposed in the fuel tank of a vehicle;
Figure 2 is a schematic view of the exemplary liquefied natural gas pump assembly shown in Figure 1 where the variable drive mechanism includes a planetary gearset that is connected to a clutch;
Figure 3 is a schematic view of another exemplary liquefied natural gas pump assembly shown in Figure 1 where the variable drive mechanism includes a planetary gearset that is connected to a clutch;
Figure 4 is a schematic view of another exemplary liquefied natural gas pump assembly constructed in accordance with the subject disclosure where the variable drive mechanism includes a planetary gearset that is connected to an electric motor;
Figure 5 is a schematic view of another exemplary liquefied natural gas pump assembly constructed in accordance with the subject disclosure where the variable drive mechanism includes a planetary gearset that is connected to a disc brake; and
Figure 6 is a schematic view of another exemplary liquefied natural gas pump assembly constructed in accordance with the subject disclosure where the variable drive mechanism includes a planetary gearset that is connected to a band brake.

### DETAILED DESCRIPTION

Referring to the Figures, wherein like numerals indicate corresponding parts throughout the several views, a liquefied natural gas pump assembly 20 is disclosed.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

In this application, the term module may be replaced with the terms electronic circuit or controller. The term module may refer to, be part of, or include an Application Specific Integrated Circuit (ASIC); a digital, analog, or mixed analog/digital discrete circuit; a digital, analog, or mixed analog/digital integrated circuit; a combinational logic circuit; a field programmable gate array (FPGA); a processor (shared, dedicated, or group) that executes code; memory (shared, dedicated, or group) that stores code executed by a processor; other suitable hardware components that provide the described functionality; or a combination of some or all of the above, such as in a system-on-chip. The term code, as used above, may include software, firmware, and/or microcode, and may refer to programs, routines, functions, classes, and/or objects. The term shared processor encompasses a single processor that executes some or all code from multiple modules. The term group processor encompasses a processor that, in combination with additional processors, executes some or all code from one or more modules. The term shared memory encompasses a single memory that stores some or all code from multiple modules. The term group memory encompasses a memory that, in combination with additional memories, stores some or all code from one or more modules. The term memory may be a subset of the term computer-readable medium. The term computer-readable medium does not encompass transitory electrical and electromagnetic signals propagating through a medium, and may therefore be considered tangible and non-transitory. Non-limiting examples of a non-transitory tangible computer readable medium include nonvolatile memory, volatile memory, magnetic storage, and optical storage.

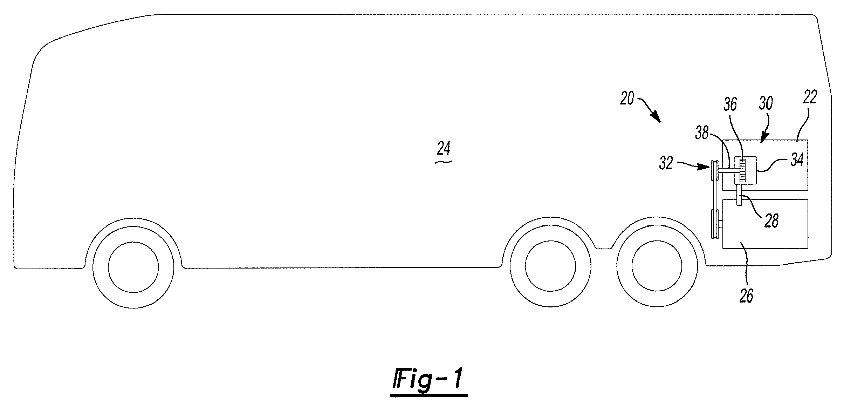

Referring to Figure 1, a liquefied natural gas pump assembly **20** is illustrated submersed in liquefied natural gas (LNG) contained within a fuel tank **22.** Such systems are commonly referred to as in-tank pumps. The fuel tank **22** is installed in a vehicle **24,** which includes an engine **26.** The liquefied natural gas in the fuel tank **22** is pumped from the fuel tank **22** and supplied to the engine **26** for combustion in response to operation of the liquefied natural gas pump assembly **20.** The liquefied natural gas is communicated from the liquefied natural gas pump assembly **20** to the engine **26** via one or more fuel lines **28** extending between the liquefied natural gas pump assembly **20** and the engine **26.** The liquefied natural gas pump assembly **20** generally includes a liquefied natural gas pump **30** (i.e. a fuel pump 30) coupled to a variable drive mechanism **32** (which may alternatively be referred to as a variable drive apparatus). The liquefied natural gas pump **30** may be a non-variable, positive displacement pump. Accordingly, the liquefied natural gas pump **30** has a fixed volume flowrate for any given pump speed. The liquefied natural gas pump **30** may generally include a housing **34** and an impeller **36** disposed within the housing **34.** A pump input shaft **38** extends from the housing **34** and is rotatably coupled to the impeller **36** such that rotation of the pump input shaft **38** rotates the impeller **36,** which pumps fluid through the housing **34** of the liquefied natural gas pump **30.** The fuel tank **22** containing the liquefied natural gas may more specifically be a cryogenic vessel to minimize heat leak from the liquefied natural gas. Accordingly, the liquefied natural gas pump **30** may be disposed within this cryogenic vessel to further minimize heat sink and to limit external exposure of cryogenic parts.

The variable drive mechanism **32** allows for adjustment of pump speed such that pump speed is not solely dependent upon engine speed. This provides variable pump speed control of conventional non-variable, positive displacement pumps without requiring substantial modifications to the structure of the liquefied natural gas pump **30** itself. Such adjustability is advantageous because pump related losses can be minimized at high engine operating speeds. Accordingly, the overall fuel efficiency of the vehicle **24** is improved. Thus, it should be appreciated that the disclosed liquefied natural gas pump assembly **20** may find utility when installed in a variety of liquefied natural gas fueled vehicle applications, including without limitation, automobile, light truck, and heavy truck applications.

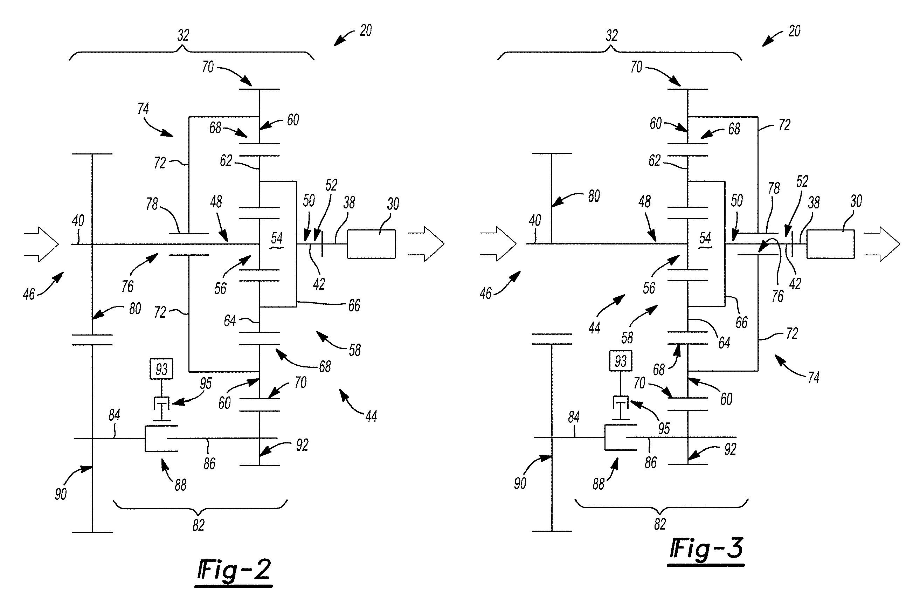

As shown in Figure 2, the liquefied natural gas pump **30** is rotatably coupled to the variable drive mechanism **32.** The variable drive mechanism **32** includes a drive input shaft **40** that receives torque from the engine **26** of the vehicle **24** and a drive output shaft **42** that is rotatably coupled to the pump input shaft **38.** The variable drive mechanism **32** also includes a planetary gearset **44** interconnecting the drive input shaft **40** and the drive output shaft **42** of the variable drive mechanism **32.** Accordingly, the planetary gearset **44** provides a first torque flow path through the variable drive mechanism **32.** Additionally, the planetary gearset **44** operates to vary a rotational speed of the drive output shaft **42** and thus the pump input shaft **38** relative to a rotational speed of the drive input shaft **40** and thus the engine **26.** This second function of the planetary gearset **44** will be discussed in further detail below.

The drive input shaft **40** of the variable drive mechanism **32** extends between a first end **46** that receives torque from the engine **26** of the vehicle **24** and a second end **48** that is opposite the first end **46** of the drive input shaft **40.** Accordingly, the second end **48** of the drive input shaft **40** is disposed adjacent to the planetary gearset **44.** The drive output shaft **42** extends between a first end **50** that is disposed adjacent to the planetary gearset **44** and a second end **52** that is adjacent and rotatably coupled to the pump input shaft **38.** The drive input shaft **40** and the drive output shaft **42** are longitudinally spaced from one another and may or may not be aligned. Accordingly, a longitudinal gap **54** is formed between the second end **48** of the drive input shaft **40** and the first end **50** of the drive output shaft **42.**

The planetary gearset **44** of the variable drive mechanism **32** includes a sun gear **56,** a plurality of pinion gears **58,** and a ring gear **60.** The sun gear **56** is rotatably coupled to and carried on the drive input shaft **40** adjacent the second end **48** of the drive input shaft **40.** The plurality of pinion gears **58** are disposed radially about the sun gear **56** and are thus arranged in meshing engagement with the sun gear **56.** Although the plurality of pinion gears **58** may include any number of pinion gears, the configurations illustrated in Figures 2-6 include four pinion gears **58.** Of the four pinion gears **58,** only two, a first pinion gear **62** and a second pinion gear **64** are illustrated in Figures 2-6 because the other two pinion gears (not shown) are outside the plane of the drawing sheets, where one is located in front of the sun gear **56** and the other is located behind the sun gear **56** from the perspective of the viewer. Each pinion gear of the plurality of pinion gears **58** is supported on a pinion gear carrier **66** that is rotatably coupled to the drive output shaft **42** adjacent the first end **50** of the drive output shaft **42.** The ring gear **60** is disposed radially outwardly of the plurality of pinion gears **58** and extends annularly about the sun gear **56** and the plurality of pinion gears **58.** The ring gear **60** is thus arranged in meshing engagement with the plurality of pinion gears **58.** The ring gear **60** illustrated in Figure 2 presents a plurality of internal gear teeth **68** that face inwardly toward the plurality of pinion gears **58** and a plurality of external gear teeth 70 that face outwardly. The plurality of pinion gears **58** are thus more particularly arranged in meshing engagement with the plurality of internal gear teeth **68** of the ring gear **60.** The ring gear **60** is supported on a ring gear carrier **72** that rotates freely and independent of the drive input shaft **40** and the drive output shaft **42.** The ring gear carrier **72** is generally cylindrical and has a partially closed end **74** that defines a pass-through opening **76** that receives one of the drive input shaft **40** and the drive output shaft **42.** A bearing assembly **78** may be disposed in the pass-through opening **76** between the ring gear carrier **72** and the drive input shaft **40** or the drive output shaft **42.** In Figure 2, the drive input shaft **40** is shown passing through the pass-through opening **76** in the ring gear carrier **72** such that the ring gear carrier **72** is supported on the drive input shaft **40** via the bearing assembly **78.** Alternatively, the drive output shaft **42** may pass through the pass-through opening **76** in the ring gear carrier **72** as shown in Figure 3 such that the ring gear carrier **72** is supported on the drive output shaft **42** via the bearing assembly **78.** It should also be appreciated that the ring gear carrier **72** may be a separate part that is rotatably coupled to the ring gear **60** or may alternatively be integral with the ring gear **60.**

Referring to Figures 2 and 3, the variable drive mechanism **32** includes a drive input gear **80** that is rotatably coupled to and carried on the drive input shaft **40** at or near the first end **46** of the drive input shaft **40.** A clutch shaft **82** extends parallel to the drive input shaft **40** such that the clutch shaft **82** and the drive input shaft **40** are transversely spaced from one another. The clutch shaft **82** is generally broken into two segments including an input segment **84** and an output segment **86** that is opposite the input segment **84.** A clutch **88** is disposed between and interconnects the input segment **84** and the output segment **86** of the clutch shaft **82.** Accordingly, the clutch **88** selectably couples rotation of the input segment **84** of the clutch shaft **82** with rotation of the output segment **86** of the clutch shaft **82.** It should be appreciated that the clutch **88** may be, without limitation, a wet frictional clutch **88,** a dry friction clutch **88,** or a viscous clutch **88** and may be constructed of one or more known components including, without limitation, a clutch housing, clutch plates, actuators, friction surfaces, and fluid moving vanes.

A clutch input gear **90** is rotatably coupled to and carried on the input segment **84** of the clutch shaft **82.** The clutch input gear **90** is arranged in meshing engagement with the drive input gear **80** such that rotation of the drive input shaft **40** drives rotation of the input segment **84** of the clutch shaft **82** via the drive input gear **80** and the clutch input gear **90.** A clutch output gear **92** is rotatably coupled to and carried on the output segment **86** of the clutch shaft **82.** The clutch output gear **92** is arranged in meshing engagement with the ring gear **60,** and more particularly, with the plurality of external gear teeth **70** of the ring gear **60.** Accordingly, rotation of the output segment **86** of the clutch shaft **82** drives rotation of the ring gear **60** via the clutch output gear **92.** As a result, a second torque flow path between said drive input shaft **40** and said planetary gearset **44** is created extending through the drive input gear **80,** the clutch input gear **90,** the clutch shaft **82,** the clutch **88,** and the clutch output gear **92.** The variable drive mechanism **32** may further include a clutch control module **93** operably connected to a clutch actuator **95.** The clutch control module **93** controls actuation of the clutch actuator **95** and actuation of the clutch actuator **95** applies pressure on the clutch **88** causing the clutch **88** to engage the output segment **86** of the clutch output shaft **82.** Together, the clutch control module **93** and the clutch actuator **95** control clutch slip to vary the amount of torque that is transmitted through the clutch **88** to the output segment **86** of the clutch output shaft **82.** In this way, operational control of the clutch **88** is used to vary the rotational speed of the drive output shaft **42** and thus the pump input shaft **38** relative to the rotational speed of the drive input shaft **40,** therefore providing the planetary gearset **44** with a variable gear ratio. Accordingly, the rotational speed of the pump input shaft **38** can be varied for any given engine speed. It should also be appreciated that in addition to driving rotation of the ring gear **60,** the second torque flow path may brake or slow rotation of the ring gear **60** depending on gear ratios chosen for the drive input gear **80** and the clutch input gear **90** versus the clutch output gear **92** and the ring gear **60.**

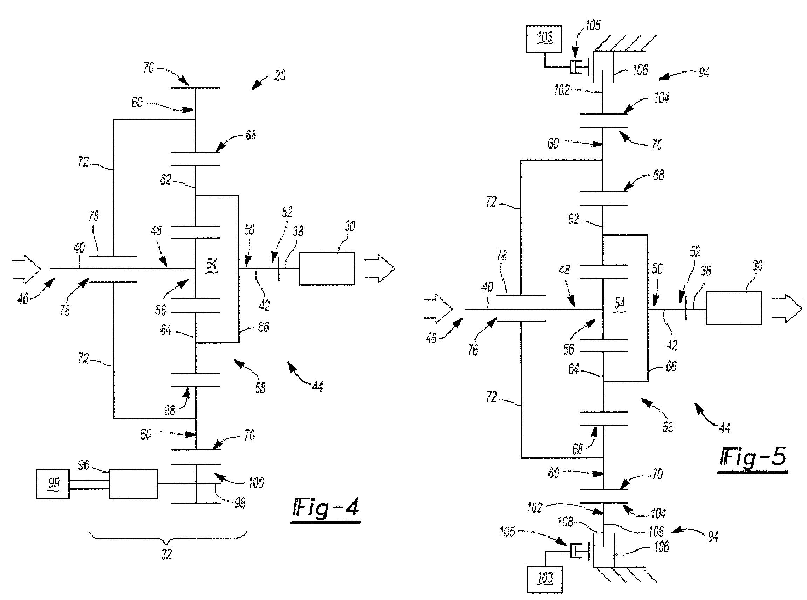

In Figure 4, the clutch **88,** clutch shaft **82,** and associated structure of the second torque flow path shown in Figures 2 and 3 is replaced by an electric motor **96** in the liquefied natural gas pump assembly **20.** As shown in Figure 4, the variable drive mechanism **32** includes an electric motor **96** disposed adjacent the planetary gearset **44.** The electric motor **96** has an electric motor output shaft **98** that rotates in response to operation of the electric motor **96.** Operation of the electric motor **96** is controlled by a power supply **99** that is electrically connected to the electric motor **96.** The power supply **99** may vary the electric current and/or voltage supplied to the electric motor **96** to provide on/off and speed control of the electric motor **96.** An electric motor output gear **100** is rotatably coupled to and carried on the electric motor output shaft **98.** The electric motor output gear **100** is arranged in meshing engagement with the ring gear **60,** and more particularly, with the plurality of external gear teeth **70** of the ring gear **60.** Accordingly, the electric motor **96** drives rotation of the electric motor output shaft **98** and thus the electric motor output gear **100** when the electric motor **96** is supplied with electric current. It should be appreciated that the electric motor **96** may be, without limitation, a direct current (DC) electric motor or an alternating current (AC) electric motor, and the electric motor **96** may be constructed of one or more known components including, without limitation, a housing, electrical windings, a permanent magnet, a rotor, a stator, an armature, a pole piece, an electromagnet, an air-gap, and a commutator.

Rotation of the electric motor output gear **100** drives rotation of the ring gear **60** or alternatively brakes rotation of the ring gear **60** depending on gear ratios between the electric motor output gear **100** and the ring gear **60.** In this way, operational control of the rotational speed of the electric motor **96** is used to vary the rotational speed of the drive output shaft **42** and thus the pump input shaft **38** relative to the rotational speed of the drive input shaft **40.** Accordingly, the rotational speeds of the pump input shaft **38** can be varied for any given engine speed.

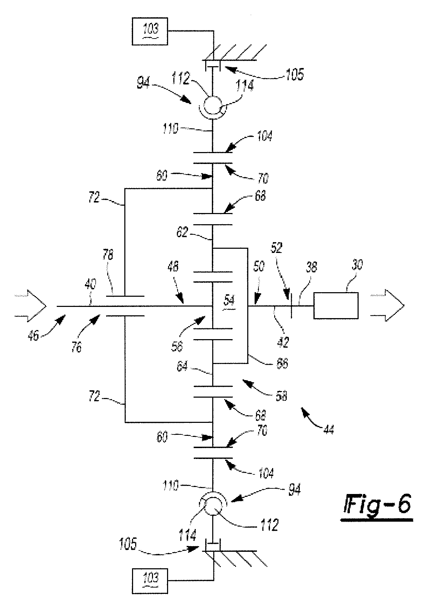

In Figures 5 and 6, the electric motor **96** of Figure 4 is replaced by a brake **94.** As shown in Figures 5 and 6, the variable drive mechanism **32** includes a brake **94** that is disposed adjacent the planetary gearset **44.** Generally, a brake gear **104** is rotatably coupled to the brake **94.** The brake gear **104** is arranged in meshing engagement with the ring gear **60** and more particularly the plurality of external gear teeth **70** of the ring gear **60.** The brake **94** is selectably applied to slow or stop rotation of the brake gear **104** and thus the ring gear **60** of the planetary gearset **44.** The variable drive mechanism **32** may include a brake control module **103** that is operably connected to a brake actuator **105.** The brake control module **103** controls actuation of the brake actuator **105** and actuation of the brake actuator **105** applies pressure on the brake **94** causing the brake **94** to engage. Together, the brake control module **103** and the brake actuator **105** control application of the brake **94** to vary the rotational speed of the drive output shaft **42** and thus the pump input shaft **38** relative to the rotational speed of the drive input shaft **40.** Accordingly, the rotational speeds of the pump input shaft **38** can be varied at any given engine speed.

Although the brake **94** may take a variety of forms, the brake **94** could be, without limitation, a disc brake as shown in Figure 5 or a band brake as shown in Figure 6. With reference to Figure 5, the brake gear **104** extends annularly about the ring gear **60** and the brake **94** is a disc brake including a caliper **106** and a rotor **102.** The caliper **106** of the brake **94** is stationarily fixed with respect to the ring gear **60** of the planetary gearset **44.** As such, the caliper **106** does not rotate with respect to the ring gear **60,** the rotor **102,** or the brake gear **104.** The rotor **102** has a pair of opposing side faces **108** that are disc-shaped and the rotor **102** generally extends annularly about the brake gear **104.** The rotor **102** is rotatably coupled to the brake gear **104** and therefore rotates with the brake gear **104.** The caliper **106** frictionally engages the opposing side faces **108** of the rotor **102** to slow or stop rotation of the rotor **102** and therefore the brake gear **104** in response to actuation of the brake **94.** It should be appreciated that the brake **94** may additionally have one or more known components including, without limitation, brake pads, a piston, a reservoir, and brake lines. Further, it should be appreciated that the brake gear **104** may alternatively be eliminated and the rotor **102** of the brake **94** may instead be rotatably coupled directly to the ring gear **60** of the planetary gear set.

With reference to Figure 5, the brake gear **104** again extends annularly about the ring gear **60** and the brake **94** is a band brake including a drum **110** and a brake band **112.** The drum **110** has an outer cylindrical surface **114** and is rotatably coupled to the brake gear **104.** Thus, the drum **110** of the brake **94** rotates with the brake gear **104.** The brake band **112** is disposed at least partially about and extends around the outer cylindrical surface **114** of the drum **110.** The brake band **112** is stationarily fixed with respect to the ring gear **60** of the planetary gearset **44,** the brake gear **104,** and the drum **110.** The brake band **112** frictionally engages outer cylindrical surface **114** of the drum **110** to slow or stop rotation of the drum **110** and thus the brake gear **104** in response to actuation of the brake **94.** It should be appreciated that the brake **94** may additionally have one or more known components including, without limitation, a friction surface or brake pad, a piston, a stationary anchor pin, a movable brake pin, and a brake cable. Further, it should be appreciated that the brake gear **104** may alternatively be eliminated and the drum **110** of brake **94** may instead be rotatably coupled directly to the ring gear **60** of the planetary gearset **44.**

Many modifications and variations of the present invention are possible in light of the above teachings and may be practiced otherwise than as specifically described while within the scope of the appended claims. These antecedent recitations should be interpreted to cover any combination in which the inventive novelty exercises its utility.

It follows a list of further embodiments.
1. A fuel pump assembly comprising:
   a fuel pump having a pump input shaft rotatably coupled to an impeller; and
   a variable drive mechanism including a drive input shaft for receiving torque from an engine of a vehicle and a drive output shaft that is rotatably coupled to said pump input shaft, said variable drive mechanism having a planetary gearset interconnecting said drive input shaft and said drive output shaft to define a first torque flow path, said planetary gearset having a variable gear ratio that varies a rotational speed of said drive output shaft and said pump input shaft relative to a rotational speed of said drive input shaft and the engine.
2. The fuel pump assembly as set forth in embodiment 1 wherein said variable drive mechanism further comprises:
   a clutch shaft spaced from said drive input shaft that includes an input segment that is rotatably coupled to said drive input shaft and an output segment opposite said input segment that is rotatably coupled to said planetary gearset; and
   a clutch disposed between and selectively coupling said input segment and said output segment of said clutch shaft such that said input segment of said clutch shaft rotates with said output segment of said clutch shaft, said clutch shaft and said clutch providing a second torque flow path between said drive input shaft and said planetary gearset.
3. The fuel pump assembly as set forth in embodiment 2 wherein said variable drive mechanism further comprises:
   a drive input gear rotatably coupled to and carried on said drive input shaft; and
   a clutch input gear rotatably coupled to and carried on said input segment of said clutch shaft, said clutch input gear being disposed in meshing engagement with said drive input gear.
4. The fuel pump assembly as set forth in embodiment 3 wherein said planetary gearset includes a sun gear, at least one pinion gear, and a ring gear.
5. The fuel pump assembly as set forth in embodiment 4 wherein said variable drive mechanism further comprises:
   a clutch output gear rotatably coupled to and carried on said output segment of said clutch shaft, said clutch output gear being disposed in meshing engagement with said ring gear of said planetary gearset.
6. The fuel pump assembly as set forth in embodiment 1 wherein said planetary gearset includes a sun gear, a plurality of pinion gears disposed in meshing engagement with said sun gear, and a ring gear having a plurality of internal gear teeth disposed in meshing engagement with said plurality of pinion gears and a plurality of external gear teeth that project outwardly from said ring gear.
7. The fuel pump assembly as set forth in embodiment 6 wherein said variable drive mechanism further comprises:
   an electric motor disposed adjacent said planetary gearset having an electric motor output shaft that rotates in response to operation of said electric motor; and
   an electric motor output gear rotatably coupled to and carried on said electric motor output shaft that is disposed in meshing engagement with said plurality of external gear teeth of said ring gear.
8. The fuel pump assembly as set forth in embodiment 6 wherein said variable drive mechanism further comprises:
   a brake disposed adjacent said planetary gearset; and
   a brake gear rotatably coupled to said brake that is disposed in meshing engagement with said plurality of external gear teeth said ring gear.
9. The fuel pump assembly as set forth in embodiment 8 wherein said brake gear extends annularly about said ring gear and wherein said brake includes a caliper that is stationarily fixed with respect to said ring gear of said planetary gearset, a rotor having opposing side faces and being rotatably coupled to said brake gear for rotation therewith, a brake actuator disposed adjacent said caliper, and a brake control module operably connected to said brake actuator that controls actuation of said brake actuator, said caliper frictionally engaging said opposing side faces of said rotor to brake rotation of said rotor and said brake gear in response to actuation of said brake actuator.
10. The fuel pump assembly as set forth in embodiment 8 wherein said brake gear extends annularly about said ring gear and wherein said brake is a band brake including a drum having an outer cylindrical surface and being rotatably coupled to said brake gear for rotation therewith and a brake band that is disposed at least partially about said outer cylindrical surface of said drum and that is stationarily fixed with respect to said ring gear of said planetary gearset, said brake band frictionally engaging said outer cylindrical surface of said drum to brake rotation of said drum and said brake gear in response to actuation of said brake.
11. The fuel pump assembly as set forth in embodiment 1 wherein said planetary gearset includes a sun gear rotatably coupled to and carried on said drive input shaft.
12. The fuel pump assembly as set forth in embodiment 11 wherein said planetary gearset includes a plurality of pinion gears supported on a pinion gear carrier, said pinion gear carrier being rotatably coupled to said drive output shaft.
13. The fuel pump assembly as set forth in embodiment 12 wherein said planetary gearset includes a ring gear having a plurality of internal gear teeth arranged in meshing engagement with said plurality of pinion gears and said ring gear being supported on a ring gear carrier that rotates freely and independent of said drive input shaft and said drive output shaft.
14. The fuel pump assembly as set forth in embodiment 13 wherein said ring gear carrier defines a pass-through opening receiving one of said drive input shaft and said drive output shaft.
15. The fuel pump assembly as set forth in embodiment 1 wherein said fuel pump is a non-variable positive displacement liquefied natural gas pump.
16. A variable drive apparatus for coupling with a pump input shaft of a liquefied natural gas pump, said variable drive apparatus comprising:
   a drive input shaft for receiving torque from an engine of a vehicle;
   a drive output shaft that is rotatably coupled to the pump input shaft; and
   a planetary gearset interconnecting said drive input shaft and said drive output shaft to define a first torque flow path, said planetary gearset having a variable gear ratio that varies a rotational speed of said drive output shaft and said pump input shaft relative to a rotational speed of said drive input shaft and the engine.
17. The variable drive apparatus as set forth in embodiment 16 further comprising:
   a clutch shaft spaced from said drive input shaft that includes an input segment that is rotatably coupled to said drive input shaft and an output segment opposite said input segment that is rotatably coupled to said planetary gearset; and
   a clutch disposed between and selectively coupling said input segment and said output segment of said clutch shaft such that said input segment of said clutch shaft rotates with said output segment of said clutch shaft, said clutch shaft and said clutch providing a second torque flow path between said drive input shaft and said planetary gearset.
18. The variable drive apparatus as set forth in embodiment 16 wherein said planetary gearset includes a sun gear, a plurality of pinion gears disposed in meshing engagement with said sun gear, and a ring gear having a plurality of internal gear teeth arranged in meshing engagement with said plurality of pinion gears and a plurality of external gear teeth.
19. The variable drive apparatus as set forth in embodiment 18 further comprising:
   an electric motor disposed adjacent said planetary gearset having an electric motor output shaft that rotates in response to operation of said electric motor; and
   an electric motor output gear rotatably coupled to and carried on said electric motor output shaft that is disposed in meshing engagement with said plurality of external gear teeth of said ring gear.
20. The variable drive apparatus as set forth in embodiment 16 further comprising:
   a brake disposed adjacent said planetary gearset; and
   a brake gear rotatably coupled to said brake that is disposed in meshing engagement with said plurality of external gear teeth of said ring gear.

## Claims

1. A fuel pump assembly (20) comprising:
a fuel pump (30) having a pump input shaft (38) rotatably coupled to an impeller (36); and
a variable drive mechanism (32) including a drive input shaft (40) for receiving torque from an engine (26) of a vehicle and a drive output shaft (42) that is rotatably coupled to said pump input shaft (38), said variable drive mechanism (32) having a planetary gearset (44) interconnecting said drive input shaft (40) and said drive output shaft (42) to define a first torque flow path, said planetary gearset (44) having a variable gear ratio that varies a rotational speed of said drive output shaft (42) and said pump input shaft (38) relative to a rotational speed of said drive input shaft (40) and the engine (26).

2. The fuel pump assembly (20) as set forth in claim 1, wherein said variable drive mechanism (32) further comprises:
a clutch shaft (82) spaced from said drive input shaft (40) that includes an input segment (84) that is rotatably coupled to said drive input shaft (40) and an output segment (86) opposite said input segment (84) that is rotatably coupled to said planetary gearset (44); and
a clutch (88) disposed between and selectively coupling said input segment (84) and said output segment (86) of said clutch shaft (82) such that said input segment (84) of said clutch shaft (82) rotates with said output segment (86) of said clutch shaft (82), said clutch shaft (82) and said clutch (88) providing a second torque flow path between said drive input shaft (40) and said planetary gearset (44).

3. The fuel pump assembly (20) as set forth in claim 2, wherein said variable drive mechanism (32) further comprises:
a drive input gear (80) rotatably coupled to and carried on said drive input shaft (40); and
a clutch input gear (90) rotatably coupled to and carried on said input segment (84) of said clutch shaft (82), said clutch input gear (90) being disposed in meshing engagement with said drive input gear (80).

4. The fuel pump assembly (20) as set forth in claims 2 or 3, wherein said planetary gearset (44) includes a sun gear (56), at least one pinion gear (58), and a ring gear (60).

5. The fuel pump assembly (20) as set forth in claim 4, wherein said variable drive mechanism (32) further comprises:
a clutch output gear (92) rotatably coupled to and carried on said output segment (86) of said clutch shaft (82), said clutch output gear (92) being disposed in meshing engagement with said ring gear (60) of said planetary gearset (44).

6. The fuel pump assembly (20) as set forth in any of claims 1 to 5, wherein said planetary gearset (44) includes a sun gear (56), a plurality of pinion gears (58) disposed in meshing engagement with said sun gear (56), and a ring gear (60) having a plurality of internal gear teeth (68) disposed in meshing engagement with said plurality of pinion gears (58) and a plurality of external gear teeth (70) that project outwardly from said ring gear (60).

7. The fuel pump assembly (20) as set forth in claim 6, wherein said variable drive mechanism (32) further comprises:
an electric motor (96) disposed adjacent said planetary gearset (44) having an electric motor output shaft (98) that rotates in response to operation of said electric motor (96); and
an electric motor output gear (100) rotatably coupled to and carried on said electric motor output shaft (98) that is disposed in meshing engagement with said plurality of external gear teeth (70) of said ring gear (60).

8. The fuel pump assembly (20) as set forth in claim 6 or 7, wherein said variable drive mechanism (32) further comprises:
a brake (94) disposed adjacent said planetary gearset (44); and
a brake gear (104) rotatably coupled to said brake (94) that is disposed in meshing engagement with said plurality of external gear teeth (70) said ring gear (60).

9. The fuel pump assembly (20) as set forth in claim 8, wherein said brake gear (104) extends annularly about said ring gear (60) and wherein said brake (94) includes a caliper (106) that is stationarily fixed with respect to said ring gear (60) of said planetary gearset (44), a rotor (102) having opposing side faces (108) and being rotatably coupled to said brake gear (104) for rotation therewith, a brake actuator (105) disposed adjacent said caliper (106), and a brake control module (103) operably connected to said brake actuator (105) that controls actuation of said brake actuator (105), said caliper (106) frictionally engaging said opposing side faces (108) of said rotor (102) to brake rotation of said rotor (102) and said brake gear (104) in response to actuation of said brake actuator (105).

10. The fuel pump assembly (20) as set forth in claim 8 or 9, wherein said brake gear (104) extends annularly about said ring gear (60) and wherein said brake (94) is a band brake including a drum (110) having an outer cylindrical surface (114) and being rotatably coupled to said brake gear (104) for rotation therewith and a brake band (112) that is disposed at least partially about said outer cylindrical surface (114) of said drum (110) and that is stationarily fixed with respect to said ring gear (60) of said planetary gearset (44), said brake band (112) frictionally engaging said outer cylindrical surface (114) of said drum (110) to brake rotation of said drum (110) and said brake gear (104) in response to actuation of said brake (94).

11. The fuel pump assembly (20) as set forth in claim 1, wherein said planetary gearset (44) includes a sun gear (56) rotatably coupled to and carried on said drive input shaft (40).

12. The fuel pump assembly (20) as set forth in claim 11, wherein said planetary gearset (44) includes a plurality of pinion gears (58) supported on a pinion gear carrier (66), said pinion gear carrier (66) being rotatably coupled to said drive output shaft (42).

13. The fuel pump assembly (20) as set forth in claim 12, wherein said planetary gearset (44) includes a ring gear (60) having a plurality of internal gear teeth (68) arranged in meshing engagement with said plurality of pinion gears (58) and said ring gear (60) being supported on a ring gear carrier (72) that rotates freely and independent of said drive input shaft (40) and said drive output shaft (42).

14. The fuel pump assembly (20) as set forth in claim 13, wherein said ring gear carrier (72) defines a pass-through opening (76) receiving one of said drive input shaft (40) and said drive output shaft (42).

15. The fuel pump assembly (20) as set forth in any of claims 1 to 14, wherein said fuel pump (30) is a non-variable positive displacement liquefied natural gas pump (30).
